# EUROPEAN PATENT SPECIFICATION

(11) **EP 2 423 048 B1**
(45) Date of publication and mention of the grant of the patent: **01.03.2017**
(21) Application number: 11178951.7
(22) Date of filing: 26.08.2011
(51) Int. Cl.: B60Q 1/08, B60Q 1/12

(54) **Light distribution control apparatus**
Lichtverteilungssteuervorrichtung
Appareil de commande de distribution lumineuse

(30) Priority: 27.08.2010 JP 2010190394
(43) Date of publication of application: 29.02.2012
(73) Proprietor: Koito Manufacturing Co., Ltd., Tokyo 108-8711 (JP)
(72) Inventor: Tatara, Naoki, Shizuoka-shi, Shizuoka (JP)
(74) Representative: Intès, Didier Gérard André

(56) References cited:
- EP-A2- 1 193 125
- EP-A2- 1 905 643
- DE-A1- 10 347 552
- DE-A1-102006 004 764
- US-A1- 2002 080 618
- US-A1- 2006 028 832
- US-A1- 2007 052 555

## Description

### TECHNICAL FIELD

An Apparatus consistent with the present invention relates to a light distribution control apparatus which controls the distribution of the light of a headlamp or the like for illuminating an area ahead of a vehicle such as a car. Specifically, an apparatus consistent with the invention relates to a light distribution control apparatus for automatically controlling the light distribution.

### BACKGROUND ART

As a technology for automatically controlling the light distribution of the headlamp of a car, there is known a steering angle sensing mode which controls the illumination direction (illumination optical axis direction) of the light of the headlamp according to a steering angle signal to be obtained by following the angle of steering of the car. Also, recently, as described in the below-cited reference patent 1, there is also proposed a lane mark sensing mode which detects the lines of both sides (vehicle lines which are hereinafter referred to as lane marks) of a running passage of the driver's own vehicle from an image obtained when picking up an area existing ahead of the vehicle, recognizes the running area of the vehicle according to the detected lane marks, and controls the illumination direction of the headlamp toward the thus recognized running area. In this lane mark sensing mode, even when a driver steers the steering wheel of the vehicle improperly, the running area of the vehicle can be illuminated positively. Thanks to this, the lane mark sensing mode is more preferable than the steering angle sensing mode from the viewpoint of safe running.

### [Prior Art Technology Reference]

### [Reference Patent]

- [Reference Patent]: Japanese Patent Publication Hei-5-338487

In the light distribution control according to the lane mark sensing mode disclosed in the reference patent 1, in the case that the lane marks are detected, it is possible to realize a suitable light distribution control. However, in the reference patent 1, there is no description as to a case where the lane marks cannot be detected. In this case, generally, for example, measures are taken to fix the light distribution in the straight-going direction or to fix the light distribution to a direction in which the light distribution has been set before. However, in such measures, the automatic light distribution control can be stopped suddenly, which gives the driver a strange feeling. Also, in a curved road or the like, proper light distribution control is hard to be carried out, which is not preferable from the viewpoint of safe running.

Documents EP 1193 125 and US 2002/080618 disclose adaptive vehicle headlamp apparatuses able to switch between different control modes according to the drive conditions. Documents DE 10 2006 004764, US 2007/052555 and EP 1 905 643 discloses other adaptive vehicle headlamp apparatuses based on data fusion algorithms.

### SUMMARY

Exemplary embodiments provide a light distribution control apparatus which, even when lane marks cannot be detected, does not give a driver a strange feeling from the light distribution but also can secure light distribution control suitable for safe running.

A light distribution control apparatus according to an exemplary embodiment of the invention is configured according to appended claim 1. It includes:
a lane mark detecting unit that detects lane marks that define an area ahead of a driver's own vehicle;
a light distribution control unit that controls the light distribution of a headlamp by selecting one of: a lane mark sensing mode wherein the illumination direction of the headlamp is controlled based on the lane marks detected by the lane mark detecting unit, and a steering angle sensing mode wherein the illumination direction of the lamp is controlled based on the steering angle of the driver's own vehicle,
wherein the light distribution control unit switches between the lane mark sensing mode and steering angle sensing mode based at least on: the steering angle, lane mark information about the detected lane marks, and a lane mark recognition rate of the detected lane marks,
wherein the light distribution control unit switches the light distribution of the headlamp to the lane mark sensing mode when the lane mark recognition rate is equal to or higher than a reference rate,
wherein the light distribution control unit switches back to the steering angle sensing mode when a curve is detected based on the lane mark information and the steering angle has varied by a given amount or more so as to drive in a direction different from the direction along the curve.

When an S-shaped curve is detected according to the lane mark information, the light distribution control unit may control the light distribution of the headlamp according to the lane mark sensing mode.

The lane mark detecting unit may detect the lane marks based on an image obtained when an area ahead of a driver's own vehicle is picked up, and
the light distribution control unit may control the illumination direction of the headlamp of the driver's own vehicle in the right and left direction.

In a light distribution control apparatus according to an embodiment when the lane mark recognition rate, which express the degree of reliability of the detected lane marks, is high, the light distribution control is carried out according to the lane mark sensing mode and, when the lane mark recognition rate is lower and thus the degree of reliability of the detected lane marks is lower, the light distribution control is carried out according to the steering angle sensing mode. Specifically, when the lane marks cannot be properly detected, light distribution control is carried based on the steering angle. This can prevent the driver from receiving a strange feeling from the light distribution and also can enhance the visibility of the area ahead of own vehicle to thereby be able to secure light distribution control suitable for safety running. Also, since the light distribution control is carried out while switching the lane mark sensing mode and steering angle sensing mode over to each other according to the lane mark information about a straight road or a curved road obtained from the lane marks detected, it is possible to secure proper light distribution control corresponding to variations in the running condition of the vehicle, thereby being able to secure the safety running of the vehicle.

Especially, since, for the S-shaped curved road, the lane mark sensing mode is maintained, an area ahead of the curved road can be illuminated regardless of steering angles when the vehicle is running along the S-shaped curved road. This can enhance the visibility of the area ahead of the vehicle while running and thus can secure the safety running of the vehicle.

### BRIEF DESCRIPTION OF THE DRAWINGS

Fig. 1 is a block view of the conceptual structure of a light distribution control apparatus according to an exemplary embodiment of the invention.
Fig. 2 is a typical view for explaining a technique for detecting lane marks.
Figs. 3A to 3C are typical views for explaining the lane mark recognition rate and lane mark information.
Fig. 4 is a flow chart of first swivel control.
Fig. 5 is a flow chart of second swivel control.
Fig. 6 is a flow chart of third swivel control.
Fig. 7 is a flow chart of fourth swivel control.

### DETAILED DESCRIPTION

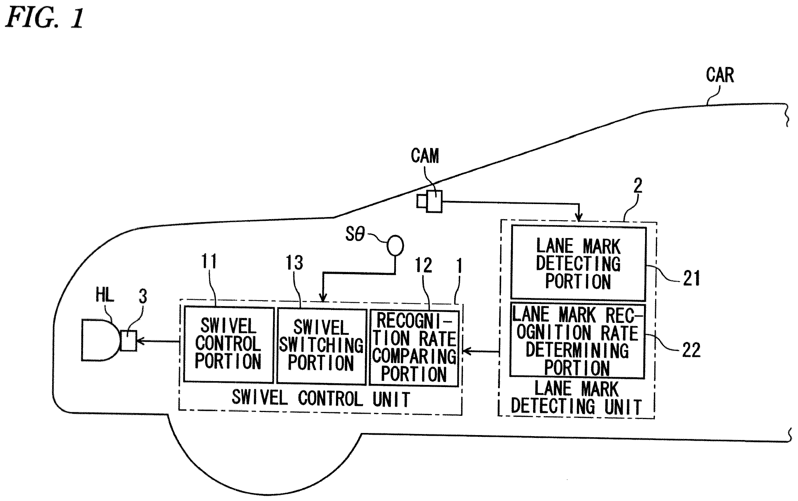

Next, description will be given below of an embodiment according to the invention with reference to the accompanying drawings. Fig. 1 is a conceptual structure view of an embodiment in which the invention is applied to a light distribution control apparatus of a headlamp used in a car. A car "CAR" includes a headlamp (headlight) HL for illuminating a road area ahead of the driver's own car (area ahead), and a swivel control unit 1 serving as a light distribution control unit according to the invention which is used to control deflection of the light distribution of the headlamp, here, the light illumination direction of the headlamp in the right and left direction. Also, the car "CAR" further includes an image pickup camera CAM for picking up the image of the area ahead of the car, and a lane mark detecting unit 2 for detecting lane marks existing in the area ahead according to an image picked up by the image pickup camera CAM. The lane mark detecting unit 2 generates lane mark information showing the state of a road, that is, whether a road determined by lane marks detected is a straight road or a curved road and the rate of recognition of the lane marks detected, and then outputs the thus generated lane mark information and lane mark recognition rate to the swivel control unit 1. Also, the car "CAR" includes a steering angle sensor Sθ for detecting the steering angle of a steering wheel to be steered by a driver, whereby the detected steering angle can be output to the swivel control unit 1.

The headlamp HL is structured as a so called swivel lamp. Specifically, while only the conceptual structure thereof is shown in Fig. 1, the headlamp HL can swivel a lamp unit (not shown) provided within the headlamp HL right and left using a swivel mechanism 3 attached to the headlamp HL, thereby being able to control deflection of the light illumination direction.

The image pickup camera CAM can be constituted of a digital camera including an image pickup element which is conventionally proposed. Here, the image pickup camera CAM is constituted of a digital camera using a CCD image pickup element or a MOS image pickup element which outputs an image signal corresponding to an image picked up.

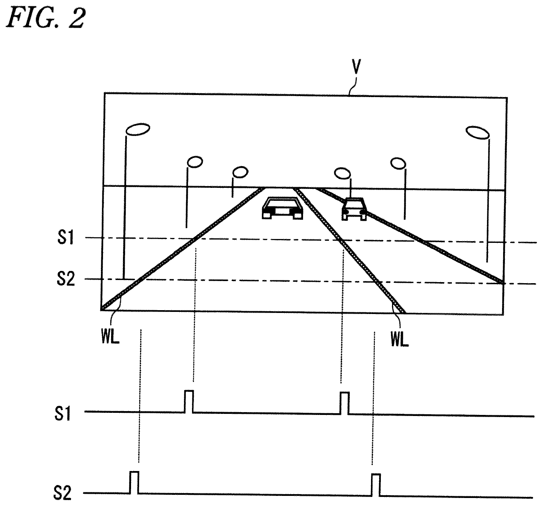

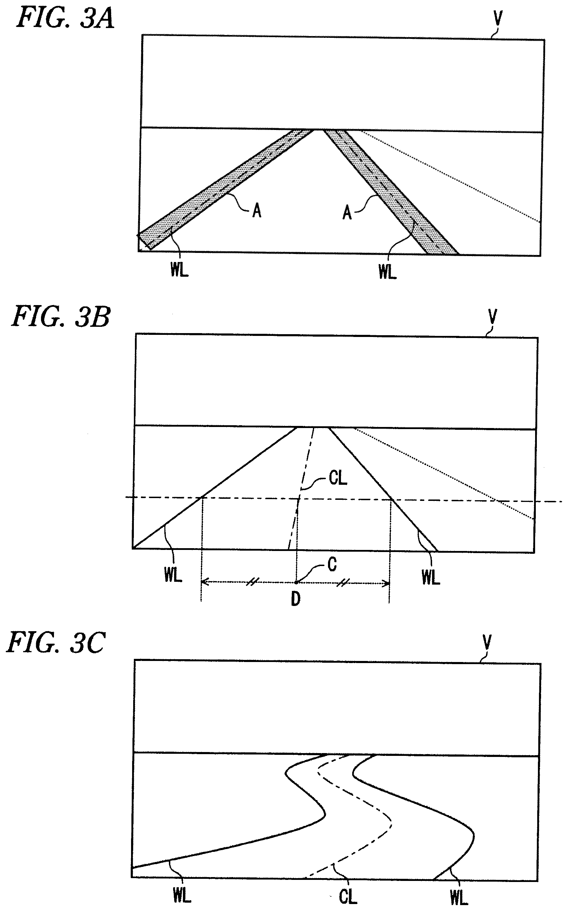

The lane mark detecting unit 2 includes a lane mark detecting portion 21 for detecting lane marks obtained from an image picked up by the image pickup camera CAM, and a lane mark recognition rate determining portion 22 for determining a lane mark recognition rate which may also be referred to as the degree of reliability that the detected lane marks are actual lane marks. The lane mark detecting portion 21, for example, as shown in Fig. 2, is used to detect high radiance points from scan signals S1, S2, ... obtained by scanning an image V picked up by the image pickup camera CAM at a large number of vertical positions in the horizontal direction, and then to detect, as lane marks WL, virtual lines respectively connecting together the high radiance points on the respective horizontal scan lines. In this case, on the same horizontal scan line, a pair or more of high radiance points are detected and, in the case that, as shown in Fig. 3A, any of these high radiance points are present within a preset area A, the corresponding lines are detected as the lane marks WL. Alternatively, as shown in Fig. 3B, the distance D in the horizontal direction between a pair of right and left high radiance points of assumed lane marks WL is measured and, in the case that the measured distance is within a given distance error range, the assumed lines are detected as the lane marks WL. The given distance D is previously set according to the angle of view of the image pickup camera CAM, the distance from the image pickup camera CAM to the road surface, and the ordinary spacing between lane marks (traffic lanes width). The given distance varies according to the vertical positions of the same horizontal scan line of the image. Fig. 3B shows that, the higher the portions of the image are, the more distant they are from the own vehicle, that is, the shorter the given distance becomes.

Also, according to the present embodiment, the lane mark detecting portion 21, as shown in Fig. 3B, detects a center point C in the right and left direction on the horizontal scan line of the detected two lane marks WL, and simulates a center line CL defined by continuously connecting together multiple center points C in the vertical direction of the image. Further, when the virtual center line CL is a straight line in the vertical direction, the lane mark detecting portion 21 determines that the current road is a straight road and when the vertical center line CL is a curved line, which is curved right or left, the portion 21 determines that the current road is a curved road. As shown in Fig. 3C, in the case that the center line CL is a curved line which curves from left to right or from right to left, the portion 21 determines that the current road is an S-shaped curved road. Thus, according to the state of the road determined, the portion 21 outputs lane mark information about a straight road, curved road, S-shaped curved road or the like.

The lane mark recognition rate determining portion 22 determines the degree of reliability that the detected lane marks are actually lane marks. That is, the determining portion 22 determines the rate of multiple high radiance points detected from the image V as shown in Fig. 2 that exist within a preset area A as shown in Fig. 3A, and determines that the thus determined rate is the lane mark recognition rate. Alternatively, when the distance D in the horizontal direction of the paired high radiance points detected with respect to a large number of horizontal scan lines as shown in Fig. 3B exist within a given distance error range, the determining portion 22 determines that the rate of such existence is the lane mark recognition rate. For example, when the high radiance points are all determined to correspond to lane marks, it is determined that the lane mark recognition rate is "10"; and, when the high radiance points do not exist at all, it is determined that the lane mark recognition rate is "0". In other words, when the lane mark recognition rate is high, the degree of reliability that the detected high radiance points are lane marks is high, whereas, when the lane mark recognition rate is low, the degree of reliability that the detected high radiance points are lane marks is low.

The swivel control unit 1 includes a swivel control portion 11 for controlling the swivel mechanism 3 of the headlamp HL, and a recognition rate comparing portion 12 for comparing the lane mark recognition rate input therein from the lane mark detecting unit 2 with a previously set reference rate. Further, the swivel control unit 1 also includes a swivel switching portion 13 which, according to the comparison results of the recognition rate comparing portion 12, the lane mark information from the lane mark detecting unit 2 and, as will be discussed later, the steering angle of own vehicle input from a steering angle sensor Sθ, switches in the swivel control portion 21 between the two modes of swivel control in the swivel control portion 21. The two modes of swivel control include a lane mark sensing mode based on the lane mark information, and a steering angle sensing mode based on the steering angle.

### (First Swivel Control)

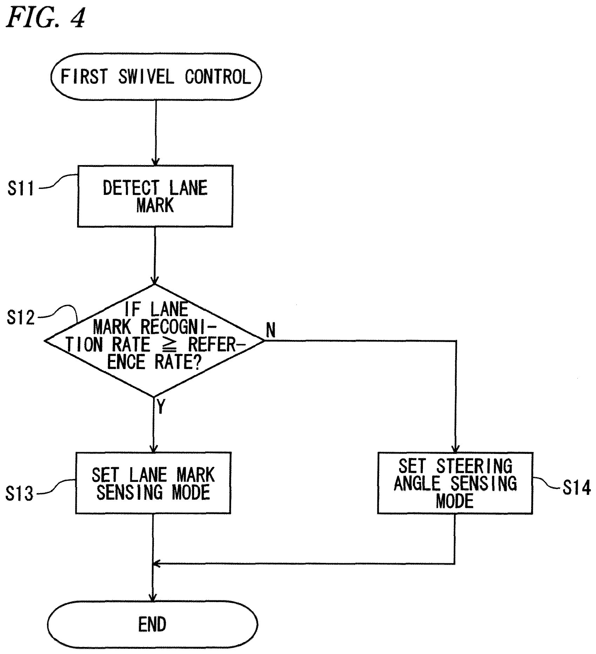

Description will be given below of the operation of the light distribution control apparatus having the above structure. Fig. 4 is a flow chart of first swivel control which provides the basic swivel control of a light distribution control apparatus according to another exemplary embodiment of the disclosure. According to an image picked up by the image pickup camera CAM, the lane mark detecting portion 21 of the lane mark detecting unit 2 detects lane marks, while the lane mark recognition rate determining portion 22 determines the lane mark recognition rate and outputs lane mark information about the detected lane marks and lane mark recognition rate to the swivel control unit 1 (S11). The recognition rate comparing portion 12 of the swivel control unit 1 compares the input lane mark recognition rate with a previously set reference rate (S12). In the case that the lane mark recognition rate is equal to or higher than the reference rate, the swivel switching portion 13 sets the swivel control portion 11 to the lane mark sensing mode (S13). In the lane mark sensing mode, since the swivel control portion 11 controls the swivel mechanism 3 according to several pieces of lane mark information simultaneously input therein, the illumination direction of the headlamp HL is swivel controlled following the detected lane marks. On the other hand, in the case that the recognition rate is lower than the reference rate when the two rates are compared by the recognition rate comparing portion 12, the swivel switching portion 13 sets the swivel control portion 11 to the steering angle sensing mode (S 14). In the steering angle sensing mode, since the swivel control portion 11 controls the swivel mechanism 3 according to the steering angle received from the steering angle sensor Sθ, the illumination direction of the headlamp HL is controlled following the steering direction of the steering wheel.

In the first swivel control, when the degree of reliability of the lane marks detected by the lane mark detecting unit 2 is high, since the headlamp HL is swivel controlled according to the lane marks detected, the running area of the driver's own vehicle can be illuminated positively and thus the visibility of the running area can be enhanced even when a driver is not carrying out a proper steering operation, thereby being able to secure the safe running of the own vehicle. Also, when the reliability of the lane marks found in the lane mark detecting unit 2 is low, there is no possibility that the illumination direction of the headlamp HL can be controlled according to the wrong lane mark information since the headlamp HL is swivel controlled according to the steering angle. Therefore, since there is no possibility that the headlamp HL can be controlled in an abnormal direction, which can prevent the driver from feeling strange in the light distribution and can also enhance the visibility of the area in the steering direction.

According to the first swivel control, the lane mark sensing mode and steering angle sensing mode can be switched between each other according to the lane mark recognition rate and is thereby able to carry out a proper swivel control operation. However, there is also a case in which the proper swivel control is hard to be carried out depending on the curved state of the road. In this case, there is selected and applied any one of the second to fourth swivel controls discussed below.

### (Second Swivel Control)

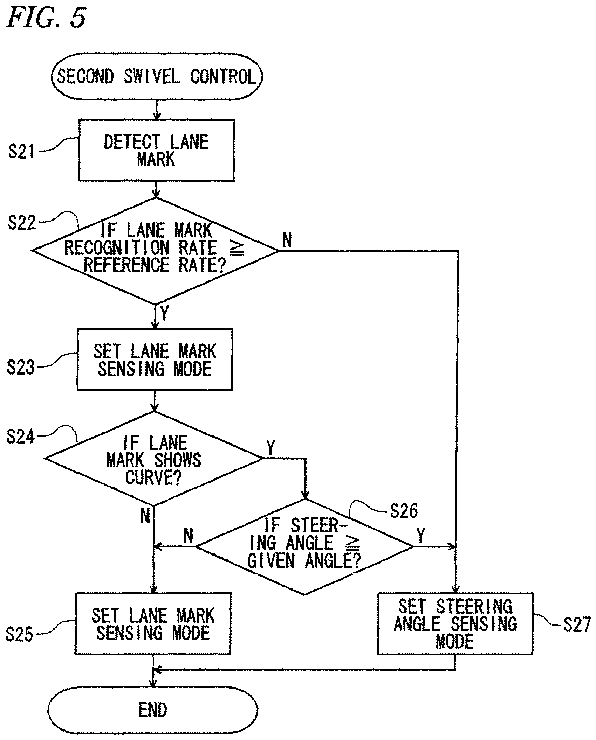

As shown in the flow chart of Fig. 5, when lane marks are detected in the lane mark detecting unit 2 (S21), the swivel control unit 1 compares the lane mark recognition rate obtained from the lane mark detecting unit 2 with the reference rate (S22) and, when the lane mark recognition rate is equal to or higher than the reference rate, sets the lane mark sensing mode (S23). When the lane mark recognition rate is lower than the reference rate, the steering angle sensing mode is set (S27) similarly to the first swivel control discussed above. Additionally in the lane mark sensing mode, it is further determined whether or not the lane marks are curved lines (S24) according to the lane mark information. When it is determined that the lane marks do not provide curved lines, the lane mark sensing mode is maintained (S25). When curved lines are found, it is determined whether or not the steering angle has varied by a given angle amount or more (S26). When the steering angle has not varied by a given angle amount or more, the lane mark sensing mode is maintained as it is (S25). When the steering angle has varied by a given angle amount or more, even in the case that the lane mark recognition rate is equal to or higher than the reference rate, the mode is switched to the steering angle sensing mode (S27) and, then, the swivel control is carried out based on the steering angle.

In the second swivel control, when the steering angle is small, the lane mark sensing mode is set and thus the illumination direction of the headlamp HL is swivel controlled in a direction along the curved road even when the road is a curved road,. However, when the driver is going to drive his or her own vehicle in a direction different from the direction along the curved road for some reason, the mode is switched over to the steering angle sensing mode and thus the illumination direction of the headlamp HL is swivel controlled in the advancing direction of the vehicle, whereby the advancing direction of the vehicle can be illuminated properly and thus the visibility of the area ahead of the vehicle can be enhanced.

### (Third Swivel Control)

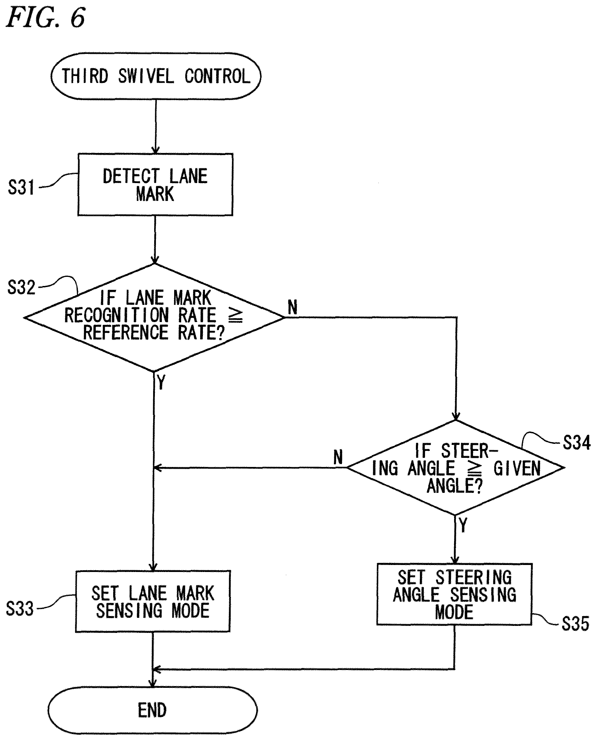

As shown in a flow chart of Fig. 6, when the lane mark detecting unit 2 detects lane marks (S31), when the lane mark recognition rate from the lane mark detecting unit 2 is equal to or higher than the reference rate (S32), the lane mark control unit 1 sets the lane mark sensing mode and carries out a swivel control operation according to the lane mark sensing mode (S33). When the lane mark recognition rate is lower than the reference rate, it is determined whether or not the steering angle obtained from the steering angle sensor Sθ has varied by a given angle amount of or more(S34). When the steering angle has not varied by a given angle amount of or more, the lane mark sensing mode is maintained as it is. However, when the steering angle has varied by a given angle amount of more, the mode is switched over to the steering angle sensing mode (S35) and, then, the swivel control is carried out according to the steering angle.

In the third swivel control, while the lane marks are detected with high reliability and the swivel control is being carried out, when the driver does not receive any strange feeling due to the swivel direction of the headlamp HL, it is preferred to determine to maintain the steering and light distributing states as they are even when the lane mark recognition rate is lowered for some reason, so that the lane mark sensing mode is maintained. When the driver experiences any strange feelings, generally, a rather greater steering operation may be carried out in order to solve such strange feeling. Thus, in this case, the mode is switched over to the steering angle sensing mode, whereby the steered direction can be illuminated and thus the visibility of the area ahead of the vehicle can be enhanced.

### (Fourth Swivel Control)

In the second swivel control, in order to solve the problem found in the first swivel control, the mode is switched over to the steering angle sensing mode when the steering angle has varied by a given angle or more in the lane mark sensing mode. However, in the case of an S-shaped curved road, for the first curve thereof, the swivel control is carried out according to the lane mark sensing mode but, for the second curve, the steering wheel is operated in the opposite direction, whereby the steering angle becomes large. Thus, the mode is necessarily switched over to the steering angle sensing mode and the swivel control is thereafter carried out according to the steering angle. Therefore, when the steering direction is varied from the first curve to the second curve, there is produced a delay in the swivel control, thereby deteriorating the visibility of the second curve.

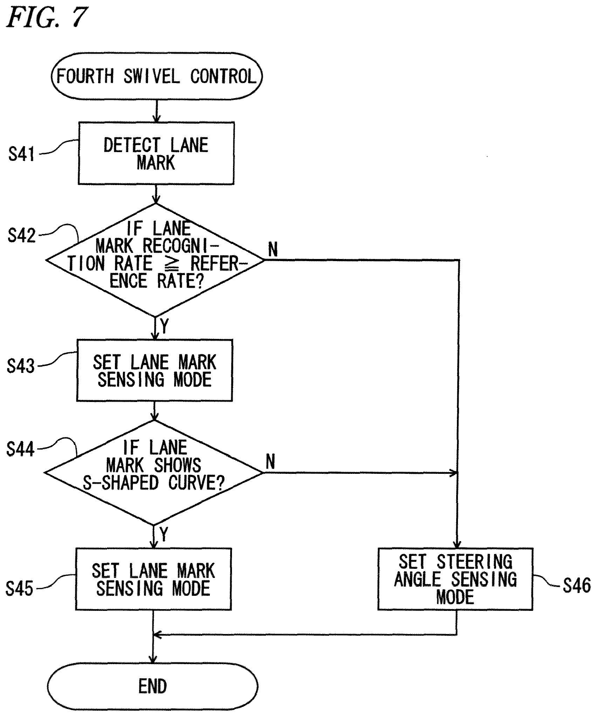

In the fourth swivel control, as shown in a flow chart of Fig. 7, when the lane mark detecting unit 2 detects lane marks (S41), the swivel control unit 1 compares the lane mark recognition rate obtained from the lane mark detecting unit 2 with the reference rate (S42). When the lane mark recognition rate is equal to or higher than the reference rate, the lane mark sensing mode is set and the swivel control is thereafter carried out according to the lane mark sensing mode (S43). When the lane mark recognition rate is lower than the reference rate, the steering angle sensing mode (S46) is set. In the lane mark sensing mode, it is determined whether or not the lane marks show S-shaped curved lines (S44) according to the lane mark information. When they are not the S-shaped curved lines, the mode is switched over to the steering angle sensing mode (S46) and the swivel control is thereafter carried out according the steering angle. On the other hand, when they are the S-shaped curved lines, the lane mark sensing mode is maintained regardless of variations in the steering angle (S45).

In the fourth swivel control, the steering angle sensing mode is set except for the S-shaped curved lines. However, since the lane mark sensing mode is maintained for the S-shaped curved lines, the light distribution is automatically swivel controlled toward the direction of the second curve according to the lane mark sensing mode even when the vehicle is running along the first curve under the steering operation by the driver. This can prevent the delay in the swivel control when the advancing direction of the vehicle is changed toward the second curve, thereby being able to enhance the visibility of the second curve.

Here, in the fourth swivel control, when it is determined in Step S44 that the lane marks are not the S-shaped curved lines, there may also be carried out the steps S26 and S27 of the flow chart of the second swivel control shown in Fig. 5. That is, when normal curves, rather than the S-shaped curves, are present, the mode may be switched according to the steering angle. Also, in the fourth swivel control, with the size (radius of curvature) of the S-shaped curve may be taken into consideration for a gentle curve having a large radius of curvature, the mode may also be switched over to the steering angle sensing mode as in the second swivel control.

Additionally, in the first through fourth embodiments, when the lane mark recognition rate is lower than the reference rate, the mode is switched to the steering angle sensing mode. However, there may also be employed a structure in which, after the mode switching, when the lane mark recognition rate becomes equal to or higher than the reference rate, or when the lane mark recognition rate returns to its initial rate, the mode is switched back to the lane mark sensing mode.

According to other embodiments the reference rate, with which the lane mark recognition rate is compared, may be set not as a fixed value, but the reference rate may also be varied according to variations in the speed of the vehicle, or according to the running environmental condition variations such as daytime, nighttime or rain weather. For example, in the high speed running time, by setting the reference rate at a relatively high value, the lane mark sensing mode can be carried out with further higher accuracy; and, in the low speed running time, by setting the reference rate at a relatively low value, the frequency of the swivel control according to the lane mark sensing mode can be enhanced to thereby be able to make effective use of the light distribution control apparatus.

In the illustrated embodiments, the lane marks are detected according to the image picked up by the image pickup camera and, from the detected lane marks, there are determined the lane mark information and lane mark recognition rate. However, the lane marks may also be detected according to lane mark information obtained from a road information system such as a car navigation apparatus or ITS, and the lane mark recognition rate may also be determined according to the thus detected lane marks.

Other embodiments can be employed in a light distribution control apparatus structured such that it detects lane marks and carries out its light distribution control according to the detected lane marks.

## Claims

1. Alight distribution control apparatus, comprising:
a lane mark detecting unit (2) adapted to detect lane marks (WL) that define an area ahead of a driver's own vehicle (CAR);
a swivel control unit (1) adapted to control deflection of the light distribution of a headlamp (HL) by selecting one of:
a lane mark sensing mode wherein the illumination direction of the headlamp (HL) is controlled based on the lane marks (WL) detected by the lane mark detecting unit (2), and
a steering angle sensing mode wherein the illumination direction of the headlamp (HL) is controlled based on the steering angle of the driver's own vehicle (CAR),
wherein the swivel control unit (1) switches between the lane mark sensing mode and steering angle sensing mode based at least on:
the steering angle,
lane mark information about the detected lane marks (WL), and
a lane mark recognition rate of the detected lane marks (WL),
**characterized in that** the swivel control unit switches the light distribution of the headlamp to the lane mark sensing mode when the lane mark recognition rate is equal to or higher than a reference rate, and
**in that** the swivel control unit switches back to the steering angle sensing mode when a curve is detected based on the lane mark information and the steering angle has varied by a given amount or more so as to drive in a direction different from the direction along the curve.

2. The light distribution control apparatus as set forth in Claim 1, in that the swivel control unit switches back to the steering angle sensing mode when a curve is detected based on the lane mark information and the steering angle has varied by a given amount or more so as to drive in a direction different from the direction along the curve unless an S-shaped curve is detected based on the lane mark information.

3. The light distribution control apparatus as set forth in Claim 1 or 2, wherein
the lane mark detecting unit (2) detects the lane marks (WL) based on an image obtained when an area ahead of the driver's own vehicle (CAR) is picked up, and
the swivel control unit (1) controls the illumination direction of the headlamp (HL) of the own vehicle (CAR) in the right and left directions.

4. The light distribution control apparatus as set forth in any one of claims 1 to 3, wherein
the lane mark recognition rate is determined by a lane mark recognition rate determining portion (22),
the lane mark recognition rate determining portion (22) determines whether the distance (D) in the horizontal direction of the paired high radiance points detected by the lane mark detecting unit (2) with respect to a large number of horizontal scan lines exist within a given distance error range, and
the lane mark recognition rate determining portion (22) determines that the lane mark recognition rate is the rate of such existence.

## Patentansprüche

1. Lichtverteilungssteuerungsvorrichtung, umfassend:
eine Fahrbahnmarkierungsdetektionseinheit (2), die dazu ausgelegt ist, Fahrbahnmarkierungen (WL) zu detektieren, die einen Bereich definieren, der vor dem eigenen Fahrzeug (CAR) eines Fahrers liegt,
eine Schwenksteuereinheit (1), die dazu ausgelegt ist, die Ablenkung der Lichtverteilung eines Scheinwerfers (HL) dadurch zu steuern, dass einer der folgenden ausgewählt wird:
ein Fahrbahnmarkierungserfassungsmodus, wobei die Beleuchtungsrichtung des Scheinwerfers (HL) anhand der durch die Fahrbahnmarkierungsdetektionseinheit (2) detektierten Fahrbahnmarkierungen (WL) gesteuert wird, und
ein Lenkwinkelerfassungsmodus, wobei die Beleuchtungsrichtung des Scheinwerfers (HL) anhand des Lenkwinkels des eigenen Fahrzeugs (CAR) eines Fahrers gesteuert wird,
wobei die Schwenksteuereinheit (1) zwischen dem Fahrbahnmarkierungserfassungsmodus und dem Lenkwinkelerfassungsmodus umschaltet auf der Basis mindestens:
des Lenkwinkels,
der Fahrbahnmarkierungsinformationen bezüglich der detektierten Fahrbahnmarkierungen (WL), und
einer Fahrbahnmarkierungserkennungsrate der detektierten Fahrbahnmarkierungen (WL),
**dadurch gekennzeichnet, dass** die Schwenksteuereinheit die Lichtverteilung des Scheinwerfers in den Fahrbahnmarkierungserfassungsmodus umschaltet, wenn die Fahrbahnmarkierungserkennungsrate mindestens so hoch ist wie eine Referenzrate, und
dadurch, dass die Schwenksteuereinheit in den Lenkwinkelerfassungsmodus zurückschaltet, wenn anhand der Fahrbahnmarkierungsinformationen eine Kurve detektiert wird und der Lenkwinkel sich um mindestens einen bestimmten Betrag verändert hat, so dass in eine andere Richtung gefahren wird als in die Richtung entlang der Kurve.

2. Lichtverteilungssteuerungsvorrichtung nach Anspruch 1, wobei die Schwenksteuereinheit in den Lenkwinkelerfassungsmodus zurückschaltet, wenn anhand der Fahrbahnmarkierungsinformationen eine Kurve detektiert wird und der Lenkwinkel sich um mindestens einen bestimmten Betrag verändert hat, so dass in eine andere Richtung gefahren wird als in die Richtung entlang der Kurve, sofern nicht einen S-Kurve anhand der Fahrbahnmarkierungsinformationen detektiert wird.

3. Lichtverteilungssteuerungsvorrichtung nach Anspruch 1 oder 2, wobei
die Fahrbahnmarkierungsdetektionseinheit (2) die Fahrbahnmarkierungen (WL) auf der Basis eines Bildes detektiert, das erhalten wird, wenn ein Bereich aufgenommen wird, der vor dem eigenen Fahrzeug (CAR) eines Fahrers liegt, und
die Schwenksteuereinheit (1) die Beleuchtungsrichtung des Scheinwerfers (HL) des eigenen Fahrzeugs (CAR) in die rechte und die linke Richtung steuert.

4. Lichtverteilungssteuerungsvorrichtung nach einem der Ansprüche 1 bis 3, wobei
die Fahrbahnmarkierungserkennungsrate durch einen Fahrbahnmarkierungserkennungsratenbestimmungsabschnitt (22) bestimmt wird,
der Fahrbahnmarkierungserkennungsratenbestimmungsabschnitt (22) bestimmt, ob die Distanz (D) in der horizontalen Richtung der gepaarten Punkte mit hoher Strahlungsdichte, die durch die Fahrbahnmarkierungsdetektionseinheit (2) mit Bezug auf eine große Anzahl horizontaler Abtastlinien detektiert werden, innerhalb eines gegebenen Distanzfehlerbereichs vorhanden ist, und
der Fahrbahnmarkierungserkennungsratenbestimmungsabschnitt (22) bestimmt, dass die Fahrbahnmarkierungserkennungsrate die Rate eines solchen Vorhandenseins ist.

## Revendications

1. Appareil de commande de distribution lumineuse, comprenant :
une unité de détection de marque de voie (2) apte à détecter des marques de voies (WL) qui définissent une zone devant le véhicule d'un conducteur (CAR) ;
une unité de commande de rotation (1) apte à commander la déflexion de la distribution lumineuse d'un phare (HL) en sélectionnant un élément parmi :
un mode de détection de marque de voie dans lequel la direction d'éclairage du phare (HL) est commandée sur la base des marques de voie (WL) détectées par l'unité de détection de marque de voie (2), et
un mode de détection de l'angle de braquage dans lequel la direction d'éclairage du phare (HL) est commandée sur la base de l'angle de braquage du véhicule du conducteur (CAR) ;
dans lequel l'unité de commande de rotation (1) commute entre le mode de détection de marque de voie et le mode de détection de l'angle de braquage, sur la base d'au moins :
l'angle de braquage,
les informations de marque de voie concernant les marques de voie détectées (WL), et
un taux de reconnaissance de marque de voie des marques de voie détectées (WL),
**caractérisé en ce que** l'unité de commande de rotation commute la distribution lumineuse du phare dans le mode de détection de marque de voie, quand le taux de reconnaissance de marque de voie est égal ou supérieur à un taux de référence, et
**en ce que** l'unité de commande de rotation repasse en mode de détection de l'angle de braquage quand une courbe est détectée sur la base des informations de marque de voie et l'angle de braquage a changé d'une quantité donnée ou plus, de façon à conduire dans une direction différente de la direction le long du virage.

2. Appareil de commande de distribution lumineuse selon la revendication 1, dans lequel l'unité de commande de rotation repasse en mode de détection de l'angle de braquage, quand un virage est détecté sur la base des informations de marque de voie et l'angle de braquage a changé d'une quantité donnée ou plus, de façon à conduire dans une direction différente de la direction le long du virage, sauf si un virage en forme de S est détecté sur la base des informations de marque de voie.

3. Appareil de commande de distribution lumineuse selon la revendication 1 ou 2, dans lequel
l'unité de détection de marque de voie (2) détecte les marques de voie (WL) sur la base d'une image obtenue quand une zone devant le véhicule du conducteur (CAR) est prélevée, et
l'unité de commande de rotation (1) commande la direction d'éclairage du phare (HL) du véhicule (CAR) dans les directions droite et gauche.

4. Appareil de commande de distribution lumineuse selon l'une quelconque des revendications 1 à 3, dans lequel
le taux de reconnaissance de marque de voie est déterminé par une partie déterminant le taux de reconnaissance de marque de voie (22),
la partie déterminant le taux de reconnaissance de marque de voie (22) détermine si la distance (D) dans la direction horizontale des points de radiance élevés appariés détectés par l'unité de détection de marque de voie (2) relativement à un grand nombre de lignes de balayage horizontales existe au sein d'une plage d'erreur de distance donnée, et
la partie déterminant le taux de reconnaissance de marque de voie (22) détermine que le taux de reconnaissance de marque de voie est le taux d'une telle existence.
